# NEUE EUROPÄISCHE PATENTSCHRIFT

(11) **EP 2 336 811 B2**
(45) Veröffentlichungstag und Bekanntmachung des Hinweises auf die Entscheidung über den Einspruch: **07.08.2024**
(45) Hinweis auf die Patenterteilung: 07.09.2016
(21) Anmeldenummer: 09180098.7
(22) Anmeldetag: 21.12.2009
(51) Int. Cl.: G02B 5/22, G02B 5/08

(54) **Verbundmaterial**
Composite material
Matériau composite

(43) Veröffentlichungstag der Anmeldung: 22.06.2011
(73) Patentinhaber: ALANOD GmbH & Co. KG, 58256 Ennepetal (DE)
(72) Erfinder: Templin, Frank, 58313 Herdecke (DE); Peros, Dimitrios, 57074 Siegen (DE)
(74) Vertreter: Dr. Solf & Zapf Patent- und Rechtsanwalts PartG mbB

(56) Entgegenhaltungen:
- EP-A1- 0 762 152
- EP-A1- 1 099 671
- EP-A1- 1 217 394
- EP-A1- 1 217 394
- WO-A1-00/29784
- WO-A1-96/09502
- DE-A1- 102009 016 708
- DE-B4- 102004 019 061
- DE-C1- 4 344 258
- US-A- 4 334 523
- US-B2- 7 585 568
- MARCUS TEXTOR: "Oberflächen von Leichtmetallen, Teil 1 und Teil 2", ETH ZÜRICH OBERFLÄCHENTECHNIK, 2002, pages 1-23, 1 - 49
- GRAF ET AL.: "Development of large area sputtered solar absorber coatings", JOURNAL OF NON-CRYSTALLINE SOLIDS, vol. 218, 1997, pages 380 - 387, XP004095605, DOI: 10.1016/S0022-3093(97)00283-4
- SCHÜLER ET AL.: "Structural and optical properties of titanium aluminum nitride films (Ti1-xAlxN)", J. VAC. SCI. TECHNOL. A, vol. 19, no. 3, May 2001 (2001-05-01), pages 922 - 929, XP012005567, DOI: 10.1116/1.1359532
- JEFFREY GORDON: "Solar Energy The State Of The Art", 2001, article E. WÄCKELGARD ET AL.: "Chapter 3 - Selectively solar-absorbing coatings", pages: 109 - 144, XP055390404
- C.E. KENNEDY: "Review of Mid- to High-Temperature Solar Selective Absorber Materials", TECHNICAL REPORT NREL/TP-520-31267, July 2002 (2002-07-01), pages 1 - 52
- NOGUCHI ET AL. ET AL.: "Fabrication for ZrCx-Zr and Cr-CrOx films for practical solar selective absorption systems", SPIE OPTICAL COATINGS FOR ENERGY EFFICIENCY AND SOLAR APPLICATIONS, vol. 324, 1982, pages 124 - 130, XP055390407, DOI: 10.1117/12.933264
- A. GOETZBERGER/B.VOBETA/J. KNOBLOCH: "Sonnenenergie: Photovoltaik", 1994, ISBN: 3-519-03214-7, pages: 125 - 129
- KIENEL: "Vakuumbeschichtung 4 Anwendungen Teil I", vol. 4, 1993, ISBN: 3-540-62274-8, article GERHARD KIENEL: "Kapitels 4.1 und 4.2", pages: 98 - 111
- Mikromechanik, Einführung in Technologie und Anwendungen,S. Büttgenbach, Springer Fachmedien Wiesbaden GmbH
- Auszug aus Frank, W.B. et al., Ullmann's Encyclopedia of Industrial Chemistry, "Alumimum", published online 15.07.2009
- Dissertation, Werkstoffkundliche Untersuchungen zum Titan-Keramik-Verbund. C. Rover. Friedrich-Schiller-Universität Jena, öffentlich verteidigt am 06.10.2009, Seilen 1, 2 und Ausschnitt aus Literaturverzeichnis
- Dissertation, Entwicklung korrosions- und verschleißbeständigerthermisch gespritzter Zylinderlaufbahnen für Verbrennungsmotoren Technische Universität Chemnitz, öffentlich verteidigt am 26.10.2016.Literaturverzeichnis Nr. 71
- Aluminium-Taschenbuch, 11. Auflage, 1955. S. 139-147
- G. Möbus, B. J. Inkson: ?Nanoscale tomography in materials sciencef.?materials today?, Dezember 2007, Bd. 10. Nr. 12. S. 18 25
- H. Schellinger et al., ?Improved Selective Properties of SiO2'TiNxOy-AITandem Absorbers Effected by Tempering", SPIE Proceedings Vol.2255, Optical Materials Technology for Energy Efficiency and Solar Energy Conversion XIII, 1994, S. 171-181
- Ullmann?s Encylopedia of Industrial Chemistry, Copper, 2012, S. 163-168
- Protzer, Röbbert, Verhalten von Kupferoberflächen an der Atmosphäre(https7/www kupferinstitut.de/fileadmin/user upload/kupferinstitut.de/de/Documents/Werkstoffe/Anwendung/Bau/DachWand/s. 131 .pdf)
- Rother, Bernd et al.. Plasma-Beschichtungsverfahren und Hartstoffschichten, 1. Aufl.. Leipzig: Dt. Verl, für Grundstoffindustrie,1992, S. 33 bis 41, Kapitel 2.3 Teilchenstrom und Schichtwachstum?
- Mohammed H. Al-Taie et al., Engineering and Technology Journal 32,Teil A, No. 9, 2014, S. 2268-2276, Characterizations of Semi-Silica Refractory Bricks Produced from Local Iraqi Materials, internet:https://www.researchqate.net/publication/311735230_Characterizationsof_Semi-silica_Refractory_Bricks_P
- Daniel Hiller et al., The negative fixed Charge of atomic layer deposited aluminium oxide?a two-dimensional SiO2/AIO, interface effect, J. Phys.D: Appl. Phys. 54, 275304, 2021. S. 1-6,Internet: https//iopscience.iop.org/article/10.1088/1361 -6463/abf675

## Beschreibung

Die vorliegende Erfindung betrifft ein Verbundmaterial mit einem aus Aluminium bestehenden Träger, mit einer auf einer Seite auf dem Träger befindlichen, aus Aluminiumoxid bestehenden Zwischenschicht und mit einem auf die Zwischenschicht aufgebrachten optisch wirksamen Mehrschichtsystem, welches aus mindestens zwei dielektrischen und/oder oxidischen Schichten, nämlich einer oberen Schicht und einer unteren, lichtabsorbierenden Schicht, besteht, wobei die obere Schicht eine dielektrische Schicht mit einem Brechungsindex n ≤ 1,7 ist.

Der Veredlungsvorgang besteht aus zwei unterschiedlichen Prozessen, die beide kontinuierlich betrieben werden können, und zwar aus der Erzeugung der Zwischenschicht in einem nasschemischen Prozeß, der zusammenfassend als Eloxieren bezeichnet wird und ein elektrolytisches Glänzen sowie eine anodische Oxydation umfasst, und aus der Aufbringung des optisch wirksamen Mehrschichtsystems im Vakuum. Bei den Schichten des optischen Mehrschichtsystems handelt es sich dabei allgemein um dielektrische Schichten, wobei die Verwendung oxidischer Schichten, wie beispielsweise Aluminiumoxid oder Titanoxid als oberste Schicht und Siliciumdioxid als mittlere Schicht, einen bevorzugten Sonderfall darstellt.

Allgemein teilt sich bei einem Objekt, auf das eine Strahlung auftrifft, diese Strahlung in einen reflektierten, einen absorbierten und einen transmittierten Anteil auf, die durch den Reflexionsgrad (Reflexionsvermögen), den Absorptionsgrad (Absorptionsvermögen) und den Transmissionsgrad (Transmissionsvermögen) des Objektes bestimmt werden. Reflexionsvermögen, Absorptionsvermögen und Transmissionsvermögen sind optische Eigenschaften, die je nach der Wellenlänge einer einfallenden Strahlung (z.B. im Ultraviolett-Bereich, im Bereich des sichtbaren Lichts, im Infrarot-Bereich und im Bereich der Wärmestrahlung) für ein- und dasselbe Material unterschiedliche Werte annehmen können. Hinsichtlich des Absorptionsvermögens ist dabei das Kirchhoffsche Gesetz bekannt, wonach der Absorptionsgrad jeweils bei einer bestimmten Temperatur und Wellenlänge in konstantem Verhältnis zum Emissionsgrad steht. Somit sind für das Absorptionsvermögen auch das Wiensche Verschiebegesetz bzw. das Plancksche Gesetz sowie das Stefan-Boltzmann-Gesetz von Bedeutung, durch die bestimmte Zusammenhänge zwischen Strahlungsintensität, spektraler Verteilungdichte, Wellenlänge und Temperatur eines sogenannten "Schwarzen Körpers" beschrieben werden. Dabei ist bei Berechnungen zu beachten, dass der "Schwarze Körper" als solcher nicht existiert und reale Stoffe in je charakteristischer Weise von der Idealverteilung abweichen.

Bei bestimmten Anwendungsfällen ist in einem Wellenlängenbereich der einfallenden Strahlung ein möglichst hoher Reflexionsgrad und in anderen Bereichen ein möglichst geringer Reflexionsgrad, dafür aber ein umso höherer Absorptionsgrad gefordert. Dies ist z.B. im Bereich der Solarkollektoren so, wo im solaren Wellenlängenbereich (etwa 300 bis etwa 2500 nm) ein maximaler Absorptionsgrad und im Bereich der Wärmestrahlung (oberhalb etwa 2500 nm) ein maximaler Reflexionsgrad gefordert wird. So sind unter dem Namen Tinox^{®} Absorber für Flachkollektoren bekannt, in denen ein Verbundmaterial, das diese Forderungen erfüllt, zum Einsatz kommt. Dieses Material besteht aus einem Träger aus einem Kupferband, einer darauf aufgebrachten Schicht aus Titanoxinitrid und einer Deckschicht aus Siliciumdioxid.

Aus der EP 1 217 394 A1 ist des Weiteren ein Verbundmaterial der eingangs genannten Art bekannt, das einen aus Aluminium bestehenden Träger, eine auf einer Seite auf dem Träger befindliche Zwischenschicht und ein auf die Zwischenschicht aufgebrachtes optisch wirksames Mehrschichtsystem umfasst. Die Zwischenschicht besteht dabei vorzugsweise aus anodisch oxidiertem oder elektrolytisch geglänztem und anodisch oxidiertem Aluminium, das aus dem Trägermaterial gebildet ist. Das optisch wirksame Mehrschichtsystem besteht aus drei Schichten, wobei die beiden oberen Schichten dielektrische und/oder oxidische Schichten sind, und die unterste Schicht eine auf die Zwischenschicht aufgetragene metallische Schicht ist. Hierbei ist vorgesehen, dass die oberste Schicht des optischen Mehrschichtsystems eine dielektrische Schicht, vorzugsweise eine oxidische, fluoridische oder nitridische Schicht der chemischen Zusammensetzung MeOₐ, MeF_{b}, MeN_{c}, mit einem Brechungsindex n < 1,8 und die mittlere Schicht des optischen Mehrschichtsystems eine chromoxidische Schicht der chemischen Zusammensetzung CrO_{z} ist, und die unterste Schicht des optischen Mehrschichtsystems aus Gold, Silber, Kupfer, Chrom, Aluminium und/oder Molybdän besteht, wobei die Indizes a, b, c und z ein stöchiometrisches oder nichtstöchiometrisches Verhältnis in den Oxiden, Fluoriden oder Nitriden bezeichnen. Dadurch wird ein Verbundmaterial geschaffen, mit dem in verschiedenen Wellenlängenbereichen Absorptionsgrad und Reflexionsgrad gezielt selektiv einstellbar sind. Darüber hinaus zeichnet sich das bekannte Verbundmaterial auch durch eine gute Verarbeitbarkeit, insbesondere Verformbarkeit, eine hohe Wärmeleitfähigkeit, sowie hohe thermische und chemische Langzeitbeständigkeit aus.

Der vorliegenden Erfindung liegt die Aufgabe zugrunde, ein Verbundmaterial der eingangs beschriebenen Art mit einer besonderen Eignung für Solarabsorber zu schaffen, das sich durch eine vereinfachte Herstellung auszeichnet.

Erfindungsgemäß wird dies durch die Merkmale des kennzeichnenden Teils des Anspruchs 1 erreicht.

Überraschenderweise wurde gefunden, dass die Zwischenschicht, wenn sie aus Aluminiumoxid besteht, das nur die extrem geringe Dicke im erfindungsgemäßen Bereich aufweist, nicht nur die bekannte Wirkung des mechanischen und korrosionshemmenden Schutzes für den Träger bewahrt und eine hohe Haftung für das darüberliegende optische Mehrschichtsystem gewährleistet, sondern dass die Zwischenschicht und der Träger dadurch auch selbst optisch wirksam werden. Die Zwischenschicht besitzt dann vorteilhafterweise ein derartig hohes Transmissionsvermögen und der Träger ein derartig hohes, durch die Transmission der Zwischenschicht wirksam werdendes Reflexionsvermögen, dass auf die unterste metallische Schicht des aus der EP 1 217 394 A1 bekannten optischen Mehrschichtsystems ohne Effizienzeinbuße verzichtet werden kann. Damit entfällt einerseits der technologische Schritt der Auftragung einer Schicht und andererseits tritt außerdem eine Materialersparnis ein, insbesondere an den für die bekanntermaßen für die unterste metallische Schicht bevorzugt eingesetzten Edelmetallen Gold und Silber bzw. auch für das ebenfalls kostenintensive Molybdän.

Das erfindungsgemäße optische Mehrschichtsystem ist zunächst - wie bei dem bekannten Verbundmaterial - in vorteilhafter Weise aufbringbar, indem auf umweltgefährdende, zum Teil giftige, Salzlösungen bei der Herstellung verzichtet werden kann. Ebenso kann aber auch - wie bereits erwähnt - auf die metallische Schicht des bekannten optischen Mehrschichtsystems verzichtet werden, so dass der Herstellungsaufwand gesenkt wird.

Die Schichten des optischen Mehrschichtsystems können dabei Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sein, so dass das gesamte optische Mehrschichtsystem aus in Vakuumfolge, insbesondere in einem kontinuierlichen Verfahren, aufgetragenen Schichten besteht.

Die untere Schicht kann dabei bevorzugt ein Titan-Aluminium-Mischoxid und/oder ein Titan-Aluminium-Mischnitrid und/oder ein Titan-Aluminium-Mischoxinitrid der chemischen Zusammensetzung TiAl_{q}OₓN_{y} enthalten, wobei die Indizes q, x und y jeweils ein stöchiometrisches oder nichtstöchiometrisches Verhältnis bezeichnen.

Es kann mit Vorteil auch vorgesehen sein, dass die untere Schicht Chromoxid der chemischen Zusammensetzung CrO_{z} und/oder Chromnitrid der chemischen Zusammensetzung CrNᵥ und/oder Chromoxinitrid der chemischen Zusammensetzung CrO_{z}Nᵥ enthält, wobei die Indizes z und v jeweils ein stöchiometrisches oder nichtstöchiometrisches Verhältnis bezeichnen.

Bei der oberen Schicht kann es sich bevorzugt um eine siliciumoxidische Schicht der chemischen Zusammensetzung SiO_{w} handeln, wobei der Index w wiederum ein stöchiometrisches oder nichtstöchiometrisches Verhältnis in der oxidischen Zusammensetzung bezeichnet.

Die genannten Verfahren gestatten es vorteilhafterweise dabei, die chemische Zusammensetzung der Schichten hinsichtlich der Indizes v, w, x, y und z nicht nur auf bestimmte, diskrete Werte einzustellen, sondern das stöchiometrische oder nichtstöchiometrische jeweils Verhältnis innerhalb bestimmter Grenzen fließend zu variieren. Dadurch können beispielsweise der Brechungsindex der reflexionsmindernden obersten Schicht, die auch ein Ansteigen der Werte für die mechanische Belastbarkeit (DIN 58196, Teil 5) bewirkt, und der Absorptionsgrad der unteren Schicht gezielt eingestellt werden, wobei beispielsweise mit zunehmendem Wert der Indizes x und/oder z die Absorptionsfähigkeit abnimmt. Auch die jeweiligen Anteile des Titan-Aluminium-Mischoxids, -nitrids und/oder -oxinitrids bzw. der Anteile der entsprechenden Chromverbindungen in der unteren Schicht können so gesteuert werden.

Erfindungsgemäß kann ein nach DIN 5036, Teil 3 bestimmter Licht-Gesamtreflexionsgrad auf der Seite des optischen Mehrschichtsystems auf einen bevorzugten Wert von weniger als 5 % eingestellt werden.

Das erfindungsgemäße Verbundmaterial weist durch seine synergistisch wirkende Eigenschaftskombination
- der Trägerschicht, z. B. deren ausgezeichneter Verformbarkeit, mit der sie Beanspruchungen der Weiterverarbeiter bei den vorzunehmenden Formgebungsprozessen ohne Probleme widersteht, z. B. deren hoher Wärmeleitfähigkeit sowie der Fähigkeit zu einer im solaren Wellenlängenbereich zusätzlich absorptionsfördernden Oberflächengestaltung, der die anderen Schichten dann im Relief folgen, und die außerdem als Metall - wie bereits ausgeführt - eine hohe Reflektivität und damit geringe Emission aufweist und der Tatsache Rechnung trägt, so dass die Strahlungsleistung als speicherbare Wärmeenergie zur Verfügung gestellt wird;
- der unteren Schicht mit ihrer hohen Selektivität des Absorptionsgrades (Spitzenwerte über 90 % im solaren Bereich, Minimalwerte unter 15 % im Wellenlängenbereich > ca. 2500 nm) und ihrer bereits erläuterten Modifikationsfähigkeit der chemischen Zusammensetzung und
- der oberen, insbesondere siliciumoxidischen, Schicht, auf deren Vorteile schon vorstehend teilweise verwiesen wurde, und die neben ihrer entspiegelnden Wirkung auch ein hohes Transmissionsvermögen aufweist und dadurch den Anteil der in der unteren Schicht absorbierbaren Strahlungswerte im solaren Bereich erhöht;
eine ausgezeichnete Verwendbarkeit für Absorber von Sonnenkollektoren auf.

Weitere vorteilhafte Ausführungen der Erfindung sind in den Unteransprüchen und in der nachfolgenden detaillierten Beschreibung enthalten.

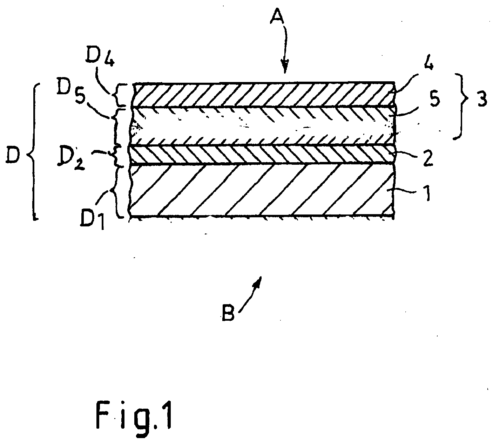

Anhand eines durch die beiliegende Zeichnung veranschaulichten Ausführungsbeispiels wird die Erfindung näher erläutert. Fig. 1 zeigt dabei eine prinzipielle Schnittdarstellung durch ein erfindungsgemäßes Verbundmaterial.

Die beschriebene Ausführung betrifft ein erfindungsgemäßes Verbundmaterial mit einer hohen Selektivität des Absorptions- und Reflexionsgrades im solaren Wellenlängenbereich und im Bereich der Wärmestrahlung.

Das Verbundmaterial besteht aus einem, insbesondere verformungsfähigen, bandförmigen Träger 1 aus Aluminium, einer auf einer Seite A des Trägers 1 befindlichen Zwischenschicht 2 und einem auf die Zwischenschicht 2 aufgebrachten optisch wirksamen Mehrschichtsystem 3.

Ein nach DIN 5036, Teil 3 bestimmter Licht-Gesamtreflexionsgrad beträgt auf der Seite A des optischen Mehrschichtsystems 3 weniger als 5 %.

Das Verbundmaterial kann bevorzugt als Coil mit einer Breite bis zu 1600 mm, vorzugsweise von 1250 mm, und mit einer Dicke D von etwa 0,1 bis 1,5 mm, vorzugsweise von etwa 0,2 bis 0,8 mm, ausgebildet sein. Der Träger 1 kann dabei vorzugsweise eine Dicke D₁ von etwa 0,1 bis 0,7 mm besitzen.

Das Aluminium des Trägers 1 kann insbesondere eine höhere Reinheit als 99,0 % aufweisen, wodurch seine Wärmeleitfähigkeit gefördert wird.

Die Zwischenschicht 2 besteht erfindungsgemäß aus - insbesondere durch anodische Oxydation aus dem Trägermaterial gebildetem - Aluminiumoxid und weist eine Dicke D₂ von nicht mehr als 30 nm auf.

Das Mehrschichtsystem 3 umfasst mindestens zwei Einzelschichten 4, 5, und zwar bevorzugt ausschließlich zwei Einzelschichten 4, 5.

Die obere Schicht 4 des optischen Mehrschichtsystems 3 ist eine siliciumoxidische Schicht der chemischen Zusammensetzung SiO_{w}.

Die untere Schicht 5 ist eine lichtabsorbierende Schicht, die bevorzugt ein Titan-Aluminium-Mischoxid und/oder ein Titan-Aluminium-Mischnitrid und/oder ein Titan-Aluminium-Mischoxinitrid der chemischen Zusammensetzung TiAl_{q}OₓN_{y} enthält.

Diese Schicht 5 kann auch Chromoxid der chemischen Zusammensetzung CrO_{z} und/ oder Chromnitrid der chemischen Zusammensetzung CrNᵥ und/oder Chromoxinitrid der chemischen Zusammensetzung CrO_{z}Nᵥ enthalten.

Die Indizes q, v, x, y, z bezeichnen dabei jeweils ein stöchiometrisches oder nicht-stöchiometrisches Verhältnis des oxidierten oder nitrierten Stoffes zum Sauerstoff in den Oxiden bzw. im Oxinitrid bzw. des Aluminiums zum Titan. Die stöchiometrischen oder nichtstöchiometrischen Verhältnisse können vorzugsweise im Bereich 0 < q und/oder v und/oder x und/oder y und/oder z < 3 liegen, während das stöchiometrische oder nichtstöchiometrische Verhältnis w Werte im Bereich 1 ≤ w ≤ 2 annehmen kann.

Dadurch, dass die beiden Schichten 4, 5 des optischen Mehrschichtsystems 3 Sputterschichten sein können, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten, ist es möglich, die Verhältnisse q, v, w, x, y, z ungestuft (also auch auf nichtstöchiometrische Werte der Indizes) einzustellen, wodurch die jeweiligen Schichteigenschaften variiert und die Schichten auch als Gradientenschichten mit über die Schichtdicke zunehmenden und/ oder abnehmenden Indizes q, v, w, x, y, z ausgebildet werden können.

Die Dicke D₂ der Zwischenschicht 2 liegt im Bereich von 15 nm bis 25 nm.

In diesem Zusammenhang ist zu erwähnen, dass auch die Zwischenschicht 2 mittels der Verfahren erzeugt werden kann, die bevorzugt zur Herstellung der Schichten 4, 5 des optischen Mehrschichtsystems 3 Anwendung finden. In diesem Fall kann dann das Verhältnis des Sauerstoffs zum Aluminium in der Schicht ebenfalls nicht nur ein stöchiometrisches, sondern auch ein nichtstöchiometrisches sein.

Insbesondere dadurch, dass die Zwischenschicht 2 durch anodische Oxydation oder elektrolytisches Glänzen und anodische Oyxdation aus dem Trägermaterial gebildet ist, wobei eine natürlicherweise auf der Aluminiumoberfläche vorhandene Oxidschicht beizend entfernt wird, kann eine hohe Fettfreiheit, Beschichtbarkeit und Haftung der darüber liegenden Schichten 4, 5 erzielt werden.

Die obere Schicht 4 des optischen Mehrschichtsystems 3 kann dabei mit Vorteil eine Dicke D₄ von mehr als 3 nm aufweisen. Bei dieser Dicke D₄ besitzt die Schicht bereits eine ausreichende Effizienz, wobei Zeit-, Material- und Energieaufwand jedoch nur geringe Werte annehmen. Ein oberer Grenzwert der Schichtdicke D₄ liegt unter diesem Gesichtspunkt bei etwa 500 nm.

Ein für die untere Schicht 5 des optischen Mehrschichtsystems 3 unter den genannten Gesichtspunkten optimaler Wert ist eine minimale Dicke D₅ von mehr als 50 nm, maximal etwa 1 µm.

Die dem optischen Mehrschichtsystem 3 abgewandte Seite B des bandförmigen Trägers 1 kann unbeschichtet bleiben oder auch - wie die Zwischenschicht 2 - beispielsweise aus anodisch oxidiertem oder elektrolytisch geglänztem und anodisch oxidiertem Aluminium bestehen.

Die vorliegende Erfindung ist nicht auf das dargestellte Ausführungsbeispiel beschränkt, sondern umfasst alle im Sinne der Erfindung gleichwirkenden Mittel und Maßnahmen. So ist es beispielsweise auch möglich, dass die obere Schicht 4 alternativ auch aus Fluoriden oder Nitriden besteht.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Träger
- 2: Zwischenschicht
- 3: optisches Mehrschichtsystem
- 4: obere Schicht von 3
- 5: mittlere Schicht von 3

- A: Oberseite (Seite von 3)
- B: Unterseite (3 abgewandt)

- D: (Gesamt-)Dicke
- D₁: Dicke von 1
- D₂: Dicke von 2
- D₄: Dicke von 4
- D₅: Dicke von 5

## Patentansprüche

1. Verbundmaterial mit einem aus Aluminium bestehenden Träger (1), mit einer auf einer Seite (A) auf dem Träger (1) befindlichen, aus Aluminiumoxid bestehenden Zwischenschicht (2) und mit einem auf die Zwischenschicht (2) aufgebrachten optisch wirksamen Mehrschichtsystem (3), welches aus mindestens zwei dielektrischen und/oder oxidischen Schichten (4, 5), nämlich einer oberen Schicht (4) und einer unteren, lichtabsorbierenden Schicht (5), besteht, wobei die obere Schicht (4) eine dielektrische Schicht mit einem Brechungsindex n ≤ 1,7 ist,
**dadurch gekennzeichnet, dass** die Zwischenschicht (2) aus anodisch oxidiertem oder elektrolytisch geglänztem und anodisch oxidiertem Aluminium besteht, das aus dem Trägermaterial gebildet ist, oder dass die Zwischenschicht (2) eine Sputterschicht, eine CVD- oder PECVD-Schicht oder eine durch Verdampfen erzeugte Schicht ist, wobei die Zwischenschicht (2) eine Dicke (D₂) im Bereich von 15 nm bis 25 nm aufweist, wobei die untere, lichtabsorbierende Schicht (5) unmittelbar auf die Zwischenschicht (2) aufgetragen ist und die Zwischenschicht (2) sich unmittelbar auf dem Träger (1) befindet.

2. Verbundmaterial nach Anspruch 1,
**dadurch gekennzeichnet, dass** die untere Schicht (5) ein Titan-Aluminium-Mischoxid und/oder ein Titan-Aluminium-Mischnitrid und/oder ein Titan-Aluminium-Mischoxinitrid der chemischen Zusammensetzung TiAl_{q}OₓN_{y} enthält,
wobei die Indizes q, x und y jeweils ein stöchiometrisches oder nichtstöchiometrisches Verhältnis bezeichnen.

3. Verbundmaterial nach Anspruch 1 oder 2,
**dadurch gekennzeichnet, dass** die untere Schicht (5) Chromoxid der chemischen Zusammensetzung CrO_{z} und/oder Chromnitrid der chemischen Zusammensetzung CrNᵥ und/oder Chromoxinitrid der chemischen Zusammensetzung CrO_{z}Nᵥ enthält, wobei die Indizes z und v jeweils ein stöchiometrisches oder nichtstöchiometrisches Verhältnis bezeichnen.

4. Verbundmaterial nach einem der Ansprüche 1 bis 3,
**dadurch gekennzeichnet, dass** die obere Schicht (4) des optischen Mehrschichtsystems (3) eine siliciumoxidische Schicht der chemischen Zusammensetzung SiO_{w} ist, wobei der Index w ein stöchiometrisches oder nichtstöchiometrisches Verhältnis bezeichnet.

5. Verbundmaterial nach Anspruch 4,
**dadurch gekennzeichnet, dass** das stöchiometrische oder nichtstöchiometrische Verhältnis w im Bereich 1 ≤ w ≤ 2 liegt.

6. Verbundmaterial nach einem der Ansprüche 2 bis 5,
**dadurch gekennzeichnet, dass** die stöchiometrischen oder nichtstöchiometrischen Verhältnisse q, v, x, y, z im Bereich 0 < q und/oder v und/oder x und/oder y und/oder z < 3 liegen.

7. Verbundmaterial nach einem der Ansprüche 1 bis 6,
**dadurch gekennzeichnet, dass** die mindestens zwei Schichten (4, 5) des optischen Mehrschichtsystems (3) Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sind.

8. Verbundmaterial nach einem der Ansprüche 1 bis 7,
**dadurch gekennzeichnet, dass** das optische Mehrschichtsystem (3) aus in Vakuumfolge in einem kontinuierlichen Verfahren aufgetragenen Schichten besteht.

9. Verbundmaterial nach einem der Ansprüche 1 bis 8,
**dadurch gekennzeichnet, dass** die obere Schicht (4) des optischen Mehrschichtsystems (3) eine Dicke (D₄) von mehr als 3 nm und maximal etwa 500 nm aufweist.

10. Verbundmaterial nach einem der Ansprüche 1 bis 9,
**dadurch gekennzeichnet, dass** die untere Schicht (5) des optischen Mehrschichtsystems (3) eine Dicke (D₅) von mehr als 50 nm und maximal etwa 1µm aufweist.

11. Verbundmaterial nach einem der Ansprüche 1 bis 10,
**dadurch gekennzeichnet, dass** ein nach DIN 5036, Teil 3 bestimmter Licht-Gesamtreflexionsgrad auf der Seite (A) des optischen Mehrschichtsystems (3) weniger als 5 % beträgt.

12. Verbundmaterial nach einem der Ansprüche 1 bis 11,
**dadurch gekennzeichnet, dass** das Aluminium des Trägers (1) eine höhere Reinheit als 99,0 % aufweist.

13. Verbundmaterial nach einem der Ansprüche 1 bis 12,
**gekennzeichnet durch** eine Ausbildung als Coil mit einer Breite bis zu 1600 mm, vorzugsweise von 1250 mm, und mit einer Dicke (D) von etwa 0,1 bis 1,5 mm, vorzugsweise von etwa 0,2 bis 0,8 mm.

## Claims

1. Composite material with a carrier (1) consisting of aluminum, with an intermediate layer (2) consisting of aluminum oxide located on one side (A) on the carrier (1) and with an optically effective multilayer system (3) applied to the intermediate layer (2), which consists of at least two dielectric and/or oxidic layers (4, 5), namely an upper layer (4) and a lower, light-absorbing layer (5), wherein the upper layer (4) is a dielectric layer with a refractive index n ≤ 1.7,
**characterized in that** the intermediate layer (2) consists of anodically oxidized or electrolytically polished and anodically oxidized aluminium, which is formed from the substrate material, or **in that** the intermediate layer (2) is a sputter layer, a CVD or PECVD layer or a layer produced by evaporation, wherein the intermediate layer (2) has a thickness (D ) in the range from 15 nm to 25 nm, wherein the lower, light-absorbing layer (5) is applied directly to the intermediate layer (2) and the intermediate layer (2) is located directly on the substrate (1).

2. Composite material according to claim 1,
**characterized in that** the lower layer (5) contains a titanium-aluminium mixed oxide and/or a titanium-aluminium mixed nitride and/or a titanium-aluminium mixed oxynitride of the chemical composition TiAl_{q}OₓN_{y}, where the indices q, x and y each denote a stoichiometric or non-stoichiometric ratio.

3. Composite material according to claim 1 or 2,
**characterized in that** the lower layer (5) contains chromium oxide of the chemical composition CrO_{z} and/or chromium nitride of the chemical composition CrNᵥ and/or chromium oxynitride of the chemical composition CrO_{z}Nᵥ, the indices z and v each denoting a stoichiometric or non-stoichiometric ratio.

4. Composite material according to one of claims 1 to 3,
**characterized in that** the upper layer (4) of the optical multilayer system (3) is a silicon oxide layer of the chemical composition SiO_{w}, the index w denoting a stoichiometric or non-stoichiometric ratio.

5. Composite material according to claim 4,
**characterized in that** the stoichiometric or non-stoichiometric ratio w is in the range 1 ≤ w ≤ 2.

6. Composite material according to any one of claims 2 to 5,
**characterized in that** the stoichiometric or non-stoichiometric ratios q, v, x, y, z are in the range 0 < q and/or v and/or x and/or y and/or z < 3.

7. Composite material according to one of claims 1 to 6,
**characterized in that** the at least two layers (4, 5) of the optical multilayer system (3) are sputter layers, in particular layers produced by reactive sputtering, CVD or PECVD layers or layers produced by evaporation, in particular by electron bombardment or from thermal sources.

8. Composite material according to one of claims 1 to 7,
**characterized in that** the optical multilayer system (3) consists of layers applied in a vacuum sequence in a continuous process.

9. Composite material according to one of claims 1 to 8,
**characterized in that** the upper layer (4) of the optical multilayer system (3) has a thickness (D₄) of more than 3 nm and a maximum of about 500 nm.

10. Composite material according to one of claims 1 to 9,
**characterized in that** the lower layer (5) of the optical multilayer system (3) has a thickness (D₅) of more than 50 nm and a maximum of about 1 µm.

11. Composite material according to one of claims 1 to 10,
**characterized in that** a total light reflectance on side (A) of the optical multilayer system (3) determined in accordance with DIN 5036, Part 3, is less than 5%.

12. Composite material according to one of claims 1 to 11,
**characterized in that** the aluminium of the carrier (1) has a purity higher than 99.0 %.

13. Composite material according to one of claims 1 to 12,
**characterized by** a design as a coil with a width of up to 1600 mm, preferably of 1250 mm, and with a thickness (D) of about 0.1 to 1.5 mm, preferably of about 0.2 to 0.8 mm.

## Revendications

1. Matériau composite avec un support (1) en aluminium, avec une couche intermédiaire (2) en oxyde d'aluminium se trouvant sur une face (A) du support (1) et avec un système multicouche (3) optiquement efficace appliqué sur la couche intermédiaire (2), qui se compose d'au moins deux couches (4, 5) diélectriques et/ou oxydantes , à savoir une couche supérieure (4) et une couche inférieure (5) absorbant la lumière, la couche supérieure (4) étant une couche diélectrique avec un indice de réfraction n ≤ 1,7,
**caractérisé en ce que** la couche intermédiaire (2) est constituée d'aluminium oxydé anodiquement ou brillant électrolytiquement et oxydé anodiquement, qui est formé à partir du matériau de support ou **en ce que** la couche intermédiaire (2) est une couche de pulvérisation, une couche CVD ou PECVD ou une couche produite par évaporation ou à partir de sources thermiques, la couche intermédiaire (2) présentant une épaisseur (D₂ ) dans la plage de 15 nm à 25 nm, la couche inférieure (5) absorbant la lumière étant appliquée directement sur la couche intermédiaire (2) et la couche intermédiaire (2) se trouvant directement sur le support (1).

2. Matériau composite selon la revendication 1,
**caractérisé en ce que** la couche inférieure (5) contient un oxyde mixte de titane et d'aluminium et/ou un nitrure mixte de titane et d'aluminium et/ou un oxynitrure mixte de titane et d'aluminium de composition chimique TiAl_{q}OₓN_{y}, où les indices q, x et y désignent respectivement un rapport stoechiométrique ou non stoechiométrique.

3. Matériau composite selon la revendication 1 ou 2,
**caractérisé en ce que** la couche inférieure (5) contient de l'oxyde de chrome de composition chimique CrO_{z} et/ou du nitrure de chrome de composition chimique CrNᵥ et/ou de l'oxynitrure de chrome de composition chimique CrO_{z}Nᵥ, les indices z et v désignant chacun un rapport stoechiométrique ou non stoechiométrique.

4. Matériau composite selon l'une quelconque des revendications 1 à 3,
**caractérisé en ce que** la couche supérieure (4) du système optique multicouche (3) est une couche d'oxyde de silicium de composition chimique SiO_{w}, l'indice w désignant un rapport stoechiométrique ou non stoechiométrique.

5. Matériau composite selon la revendication 4,
**caractérisé en ce que** le rapport stoechiométrique ou non stoechiométrique w se situe dans la plage 1≤ w≤ 2.

6. Matériau composite selon l'une quelconque des revendications 2 à 5,
**caractérisé en ce que** les rapports stoechiométriques ou non stoechiométriques q, v, x, y, z se situent dans la plage 0 < q et/ou v et/ou x et/ou y et/ou z < 3.

7. Matériau composite selon l'une quelconque des revendications 1 à 6,
**caractérisé en ce que** les au moins deux couches (4, 5) du système optique multicouche (3) sont des couches de pulvérisation, en particulier des couches produites par pulvérisation réactive, des couches CVD ou PECVD ou des couches produites par évaporation, en particulier par bombardement électronique ou à partir de sources thermiques.

8. Matériau composite selon l'une quelconque des revendications 1 à 7,
**caractérisé en ce que** le système optique multicouche (3) est constitué de couches appliquées en succession sous vide dans un procédé continu.

9. Matériau composite selon l'une quelconque des revendications 1 à 8,
**caractérisé en ce que** la couche supérieure (4) du système optique multicouche (3) présente une épaisseur (D₄) de plus de 3 nm et au maximum d'environ 500 nm.

10. Matériau composite selon l'une quelconque des revendications 1 à 9,
**caractérisé en ce que** la couche inférieure (5) du système optique multicouche (3) présente une épaisseur (D₅) de plus de 50 nm et au maximum d'environ 1 µm.

11. Matériau composite selon l'une quelconque des revendications 1 à 10,
**caractérisé en ce qu'**un degré de réflexion totale de la lumière sur le côté (A) du système optique multicouche (3), déterminé selon la norme DIN 5036, partie 3, est inférieur à 5 %.

12. Matériau composite selon l'une quelconque des revendications 1 à 11,
**caractérisé en ce que** l'aluminium du support (1) a une pureté supérieure à 99,0 %.

13. Matériau composite selon l'une quelconque des revendications 1 à 12,
**caractérisé par** une réalisation sous forme de bobine d'une largeur allant jusqu'à 1600 mm, de préférence de 1250 mm, et d'une épaisseur (D) d'environ 0,1 à 1,5 mm, de préférence d'environ 0,2 à 0,8 mm.
